# EUROPEAN PATENT SPECIFICATION

(11) **EP 3 465 248 B1**
(45) Date of publication and mention of the grant of the patent: **08.09.2021**
(21) Application number: 17806026.5
(22) Date of filing: 29.05.2017
(51) Int. Cl.: G06F 21/62, H04L 29/06

(54) **METHOD AND SYSTEM FOR ANONYMIZATION AND EXCHANGE OF ANONYMIZED DATA ACROSS A NETWORK**
VERFAHREN UND SYSTEM FÜR ANONYMISIERUNG UND AUSTAUSCH VON ANONYMISIERTEN DATEN ÜBER EIN NETZWERK
PROCÉDÉ ET SYSTÈME D'ANONYMISATION ET D'ÉCHANGE DE DONNÉES RENDUES ANONYMES SUR UN RÉSEAU

(30) Priority: 01.06.2016 US 201662343876 P
(43) Date of publication of application: 10.04.2019
(73) Proprietor: Otonomo Technologies Ltd., 4052919 Even Yehuda (IL)
(72) Inventor: ITZKOVICH, Yosef Haim, 4331313 Raanana (IL); RAANAN, Tomer, 5591217 Ganey Tikva (IL); SAGIR, Maayan, 6963304 Tel Aviv (IL); COHEN, Avner, Lapid 7313300 (IL)
(74) Representative: Pearl Cohen Zedek Latzer Baratz UK LLP
(86) International application number: PCT/IL2017/050602
(87) International publication number: WO 2017/208236

(56) References cited:
- US-A1- 2002 099 824
- US-A1- 2011 010 563
- US-A1- 2014 195 100
- US-A1- 2015 128 284
- US-A1- 2015 215 274
- US-B1- 8 941 485
- PETIT JONATHAN ET AL: "Pseudonym Schemes in Vehicular Networks: A Survey", IEEE COMMUNICATIONS SURVEYS & TUTORIALS, vol. 17, no. 1, 7 August 2014 (2014-08-07) , pages 228-255, XP011576292, DOI: 10.1109/COMST.2014.2345420 [retrieved on 2015-03-16]
- NAIM ASAJ ET AL: "Towards an Identity-Based Data Model for an Automotive Privacy Process", PRIVACY, SECURITY, RISK AND TRUST (PASSAT), 2012 INTERNATIONAL CONFERENCE ON AND 2012 INTERNATIONAL CONFERNECE ON SOCIAL COMPUTING (SOCIALCOM), IEEE, 3 September 2012 (2012-09-03), pages 789-796, XP032302820, DOI: 10.1109/SOCIALCOM-PASSAT.2012.87 ISBN: 978-1-4673-5638-1
- KUNG SECURE VEHICLE COMMUNICATION, [Online] 15 February 2008, XP055445810 Retrieved from the Internet: <URL:https://www.sevecom.eu/De)iverabtes/Se vecom_De!iverab!e_D2.1_v3.0.pdf>

## Description

### FIELD OF THE INVENTION

The present invention relates generally to the field of data anonymizing, and more particularly to data anonymizing of unique identifiers of objects monitored on a networked database, and the exchange of anonymized data across a network.

### BACKGROUND OF THE INVENTION

Prior to setting forth the background of the invention, it may be helpful to set forth definitions of certain terms that will be used hereinafter.

The term "unique identifier" as used herein is defined as a personalized identifier of an object and/or a unique identifier of an object.

The term "unidirectional conversion" as used herein is defined as an asymmetric conversion of one object (e.g. number, character or combinations of numbers or characters) to another that does not allow reconstructing the original object from the converted value. A "bi-directional conversion" on the other hand or a "symmetric conversion" allows recalculating the original value from the converted value and vice versa.

The term "private zone" as used herein is defined as part of a computer network and/or cloud that hold data that may be identified to be associated with specific users or objects.

The term "anonymized zone" as used herein is defined as part of a computer network that hold data that may not be identified as associated with specific users or objects, inside the zone. At the same time, outside the anonymized zone, it is possible to associate data in the anonymized zone to specific users or objects.

In many cloud-based systems there is a need to anonymize the unique identifiers of certain objects in order to maintain their user's privacy, and/or secure business confidential information. The use of keys or temporary tokens is known in the art but is somewhat insufficient for large distributed systems that aggregate transfer and exchange personalized data and/or confidential data from various sources and need to maintain the data on anonymized networks and databases.

The term "personalized database" as used herein is defined as a database holding identifiers of persons, and/or entities (such as vehicles, interjections etc.), and/or non-physical entities (such as processes, locations, trips and the like).

The term "cloud" as used herein is defined as a cloud and/or a computer system including computer networks.

The term "server" as used herein may refer to one or more physical servers, one or more software servers or combinations of the two.

US 2011/010563 A1 discloses a method for accessing anonymized data. The paper "Pseudonym Schemes in Vehicular Networks: A Survey" by Jonathan Petit et al provides further relevant prior art.

### SUMMARY OF THE INVENTION

The invention is defined in the appended independent claims. Embodiments of the present invention provide a system and a method for anonymizing unique identifiers of objects on a networked/cloud database. A personalized database holding unique identifiers of users or objects may use a module to anonymize the unique identifiers of the users/objects and convert it to anonymized identifiers using an asymmetric conversion. In consequence, no unique identifier of any user/object get out of the personalized database.

A third party application can request the matched anonymized token for a given user identifier. The token is generated using a symmetric conversion and anonymized and unique per third party application. Then, the third party application can retrieve data using the anonymized token. The data is only retrieved using the anonymized token only. Furthermore, the invention below details the way several entities can exchange unique identifiers across a network or cloud, without disclosing the identifiers across the network/cloud.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
**Figure 1** is a block diagram illustrating non-limiting exemplary architecture of a file system in accordance with some embodiments of the present invention;
**Figure 2** is a high level flowchart illustrating non-limiting exemplary method in accordance with some embodiments of the present invention;
**Figures 3-6** are flow charts illustrating a non-limiting example of data anonymizing in accordance with some embodiments of the present invention; and
**Figure 7** is a block diagram illustrating an aspect according to some embodiments of the present invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE INVENTION

In the following description, various aspects of the present invention will be described. For purposes of explanation, specific configurations and details are set forth in order to provide a thorough understanding of the present invention. However, it will also be apparent to one skilled in the art that the present invention may be practiced without the specific details presented herein. Furthermore, well known features may be omitted or simplified in order not to obscure the present invention.

Unless specifically stated otherwise, as apparent from the following discussions, it is appreciated that throughout the specification discussions utilizing terms such as "processing," "computing," "calculating", "recalculating", "determining," or the like, refer to the action and/or processes of a computer or computing system, or similar electronic computing device or software, that manipulates and/or transforms data represented as physical or logical, such as electronic, quantities within the computing system's registers and/or memories into other data similarly represented as physical or logical quantities within the computing system's memories, registers or other such information storage, transmission or display devices.

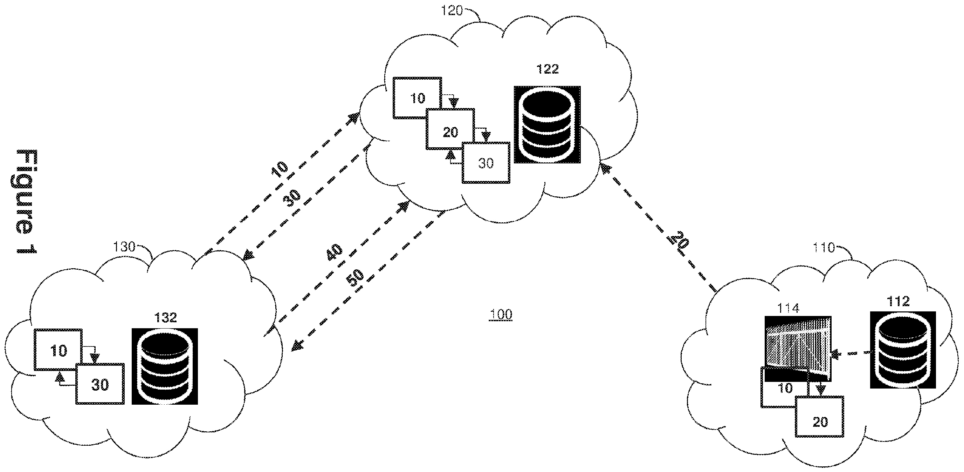

**Figure 1** is a block diagram illustrating non-limiting exemplary architecture of a computer-based system **100** in accordance with embodiments of the present invention. A system **100** for communicating anonymized data of uniquely identified objects via a computer network, is illustrated herein. The system includes: personalized database **112** configured to maintain a plurality of unique identifiers **10** of objects associated with respective data and a gatekeeper module **114** located at the personalized cloud or computer system **110,** configured to anonymize the unique identifiers **10** by applying a unidirectional conversion, to yield respective anonymized unique identifiers **20.** Computer system **110** may be implemented by a computer processor.

System **100** may further include a networked server **122** on an anonymized cloud or computer system **120** configured to maintain the respective data associated with the anonymized unique identifiers **20,** wherein the networked server **122** is configured to: receive a request from at least one third party client **130,** for a temporary anonymized identifier **30** associated with an object linked to a specific unique identifier **10;** uni-directionally convert the specific unique identifier **10** to a respective specific anonymized unique identifier **20,** using the unidirectional conversion; in a case the anonymized unique identifier **20** exists on the server, generate a temporary anonymized identifier **30** by applying a bi-directional conversion to the specified anonymized unique identifier **20,** wherein the bi-directional conversion is specific to the at least one third party **130;** receive at the networked server **120,** a request **40** from the third party **130** for data associated with an object linked to a specific temporary anonymized identifier **30;** convert the specific temporary anonymized identifier **30** into a respective anonymized unique identifier **20** based on the bi-directional conversion; and provide the requested data from the networked server **122** to the third party **130** based on the specific anonymized unique identifier **20** via response **50** communicated from anonymized cloud **120** to third party cloud **130.** Computer system **120** may be implemented by a computer processor.

It should be note that any third party cloud **130** may keep the association of specific unique identifier **10** to the received temporary anonymized identifier **30** in an internal database, and vice versa.

According to some embodiments of the present invention, the providing of the data to the third party is only identifiable by the temporary anonymized identifier.

According to some embodiments of the present invention the unique identifiers of objects associated with respective data are obtained from a plurality of sources, each holding a database of objects and their respective data.

According to some embodiments of the present invention, the temporary anonymized identifier is associated with a predefined time span after which it ceased to be operational.

According to some embodiments of the present invention, the networked database and the personalized database may be distinct from each other and communicate over a communication channel, but they may also be collocated and only be logically separated.

According to some embodiments of the present invention, at least one third party comprises a plurality of third party clients, each associated with a unique bi-directional conversion at the networked database.

According to some embodiments of the present invention, the objects may be tangible objects such as vehicles or specific locations but also intangible objects such as trip IDs.

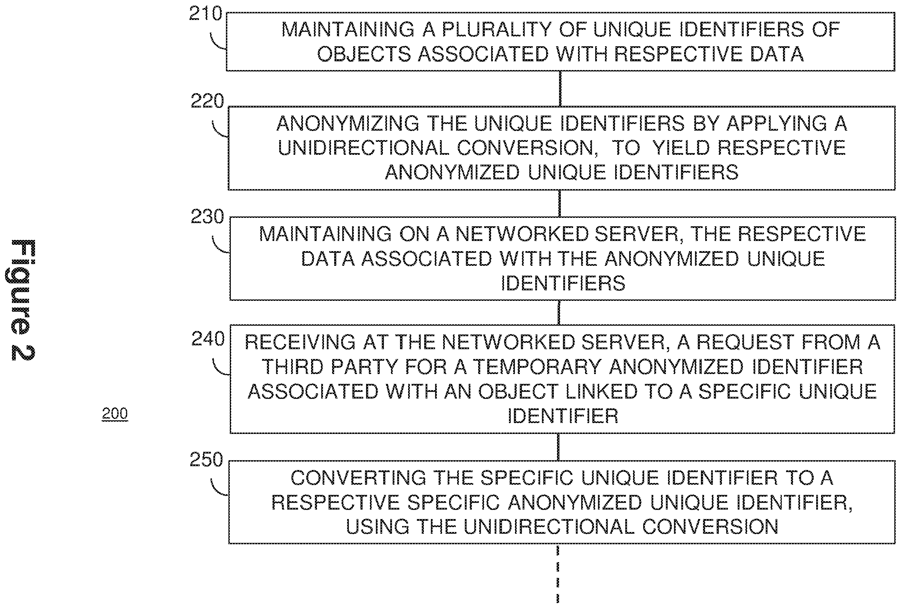

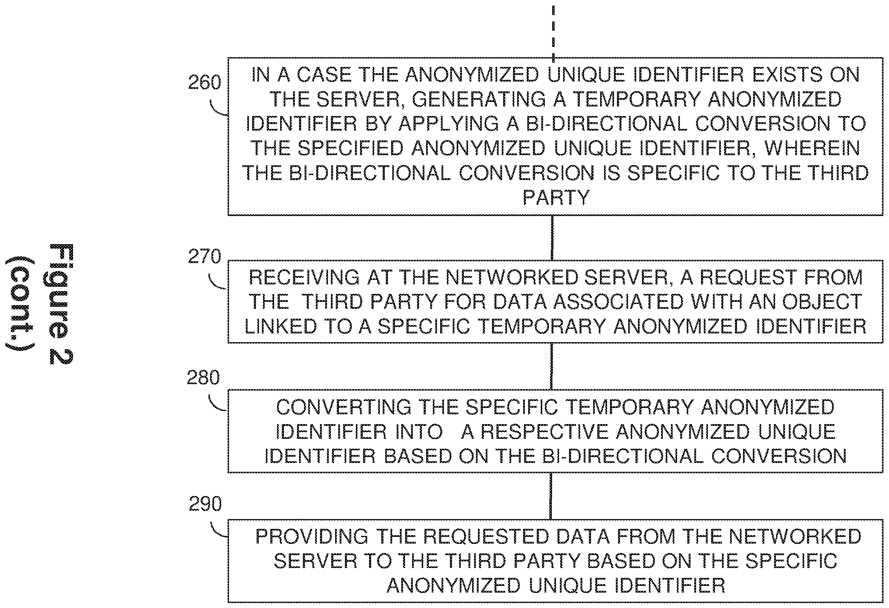

**Figure 2** is a high level flowchart illustrating non-limiting exemplary method for communicating anonymized data of unique identified objects via a computer network, in accordance with embodiments of the present invention. Method **200** may include: maintaining on a personalized database, a plurality of unique identifiers of objects associated with respective data **210;** anonymizing the unique identifiers by applying a unidirectional conversion, to yield respective anonymized unique identifiers **220;** maintaining on a networked server, the respective data associated with the anonymized unique identifiers **230;** receiving at the networked server, a request from at least one third party for a temporary anonymized identifier associated with an object linked to a specific unique identifier **240;** converting the specific unique identifier to a respective specific anonymized unique identifier, using the unidirectional conversion **250;** in a case the anonymized unique identifier exists on the server, generating a temporary anonymized identifier by applying a bi-directional conversion to the specified anonymized unique identifier, wherein the bi-directional conversion is specific to the at least one third party **260;** receiving at the networked server, a request from the third party for data associated with an object linked to a specific temporary anonymized identifier **270;** converting the specific temporary anonymized identifier into a respective anonymized unique identifier based on the bi-directional conversion **280;** and providing the requested data from the networked server to the third party based on the specific anonymized unique identifier **290.**

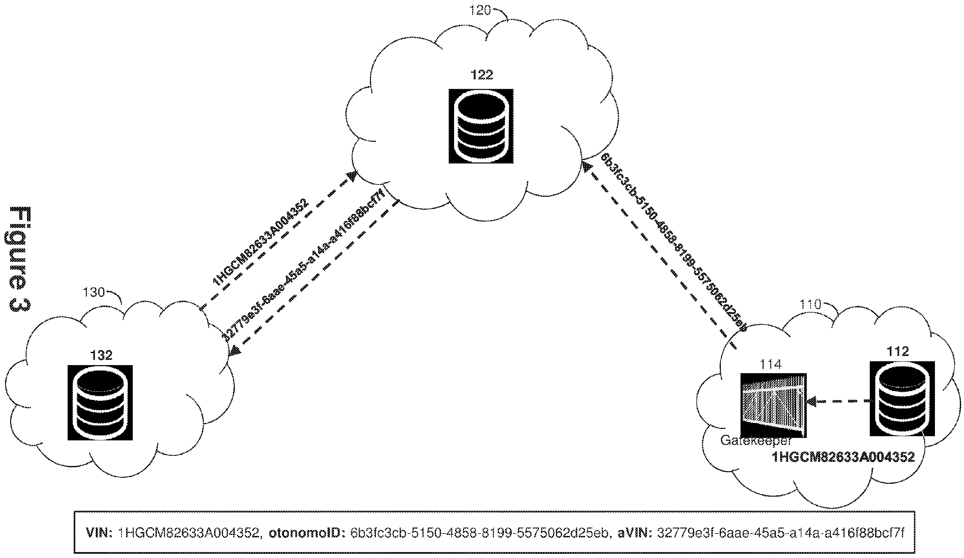

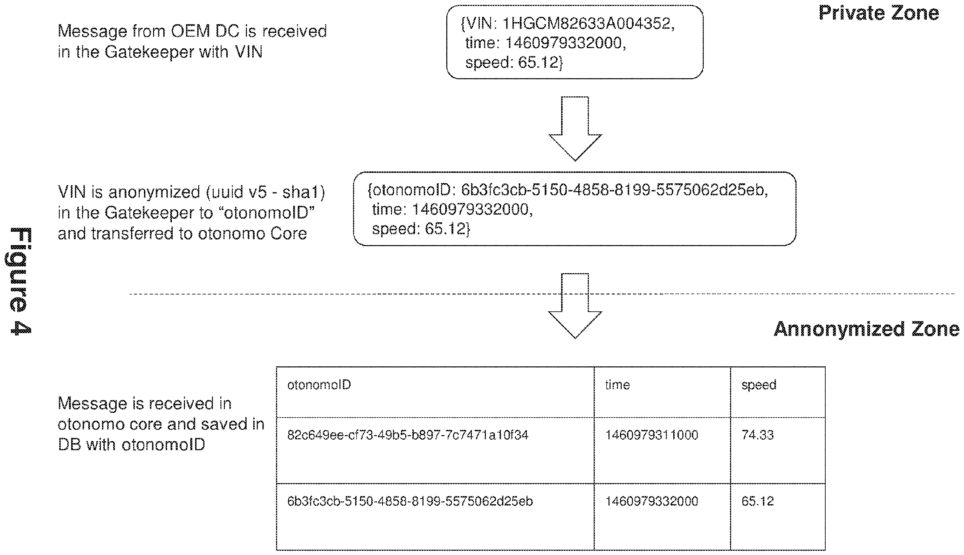

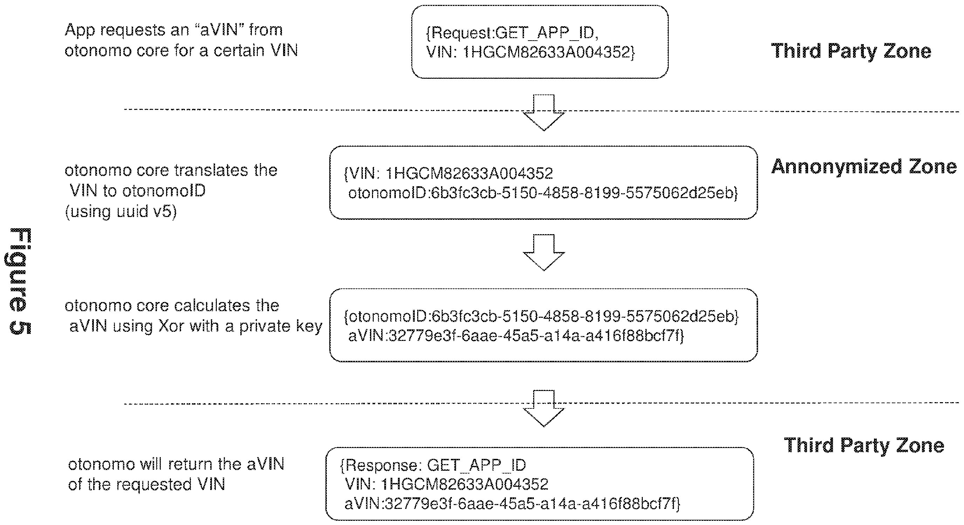

**Figures 3-6** are flow charts illustrating a non-limiting example of data anonymization in accordance with embodiments of the present invention. For the sake of the non-limiting example, as illustrated in **Figure 3** private zone **110** holds data on database **112** associated with unique identifiers of vehicles known as vehicle identifier numbers (VIN); anonymized zone **120** hold data on database **122** which is identified by anonymized identifiers called here OtonomoID by way of example for the remainder of this document; and third party zone **130** holds data of personalized database **132** which is identified by anonymized temporary token called anonymized vehicle identifier numbers (aVIN). The flow in **Figure 4** shows how speed and time of a specify vehicle identified by a VIN is kept. The VIN is anonymized by an asymmetric conversion so at the anonymized zone the same data is kept with the OtonomoID as an anonymized identifier. In **Figure 5** the third party zone issues a request for a token (aVIN) for a specific OtonomoID which is translated by the anonymized zone into the temporary token (aVIN) and returned to the third party zone.

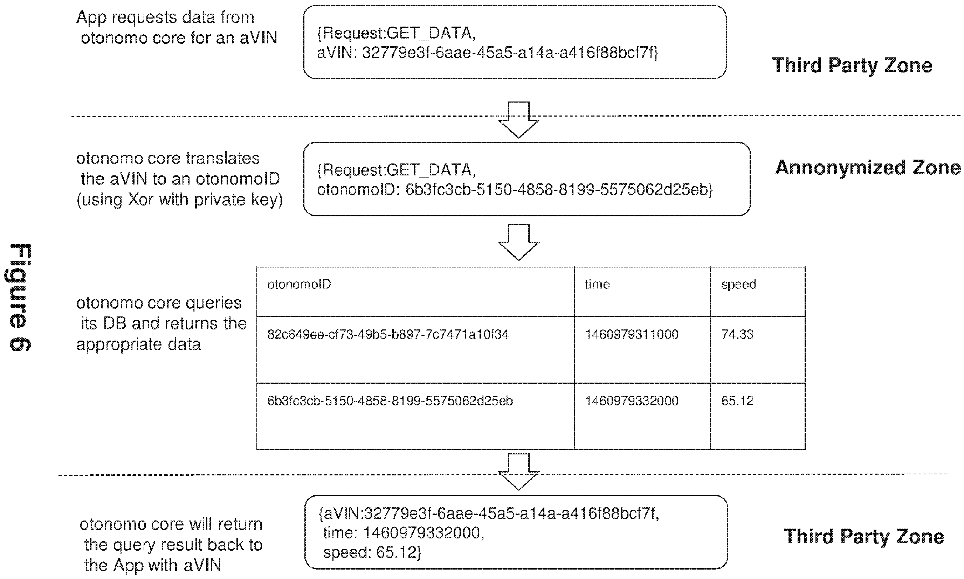

In **Figure 6** the third party zone then requests actual data for the temporary token (aVIN). The symmetric conversion is then applied at the anonymized zone and the corresponding data to the OtonomoID is then retrieved and returned to the third party zone.

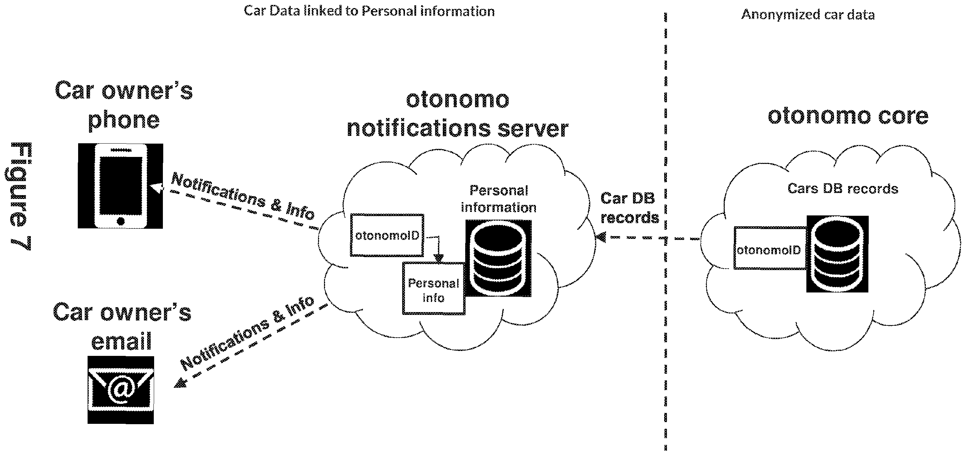

**Figure 7** is a block diagram illustrating an aspect according to some embodiments of the present invention. Here the Otonomo core which is the anonymized zone discussed above is used by a notification server in order to retrieve data relating to specific car users. Once the anonymized data is retrieved, the notification server can approach the specific car users based on the personal information that has been gathered without the actual data being exposed.

In accordance with embodiments of the present invention, the non-transitory computer readable medium may further include a set of instructions, when executed, further cause the least one processor to implement aforementioned method.

In order to implement the method according to embodiments of the present invention, a computer processor may receive instructions and data from a read-only memory or a random access memory or both. At least one of aforementioned steps is performed by at least one processor associated with a computer. The essential elements of a computer are a processor for executing instructions and one or more memories for storing instructions and data. Generally, a computer will also include, or be operatively coupled to communicate with, one or more mass storage devices for storing data files. Storage modules suitable for tangibly embodying computer program instructions and data include all forms of non-volatile memory, including by way of example semiconductor memory devices, such as EPROM, EEPROM, and flash memory devices and also magneto-optic storage devices.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in base band or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wire-line, optical fiber cable, RF, etc., or any suitable combination of the foregoing.

Computer program code for carrying out operations for aspects of the present invention may be written in any combination of one or more programming languages, including an object oriented programming language such as Java, Smalltalk, C++, Python or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described above with reference to flowchart illustrations and/or portion diagrams of methods, apparatus (systems) and computer program products according to embodiments of the invention. It will be understood that each portion of the flowchart illustrations and/or portion diagrams, and combinations of portions in the flowchart illustrations and/or portion diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or portion diagram portion or portions.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or portion diagram portion or portions.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or portion diagram portion or portions.

The aforementioned flowchart and diagrams illustrate the architecture, functionality, and operation of possible implementations of systems, methods and computer program products according to various embodiments of the present invention. In this regard, each portion in the flowchart or portion diagrams may represent a module, segment, or portion of code, which comprises one or more executable instructions for implementing the specified logical function(s). It should also be noted that, in some alternative implementations, the functions noted in the portion may occur out of the order noted in the figures. For example, two portions shown in succession may, in fact, be executed substantially concurrently, or the portions may sometimes be executed in the reverse order, depending upon the functionality involved. It will also be noted that each portion of the portion diagrams and/or flowchart illustration, and combinations of portions in the portion diagrams and/or flowchart illustration, can be implemented by special purpose hardware-based systems that perform the specified functions or acts, or combinations of special purpose hardware and computer instructions.

In the above description, an embodiment is an example or implementation of the inventions. The various appearances of "one embodiment," "an embodiment" or "some embodiments" do not necessarily all refer to the same embodiments.

Although various features of the invention may be described in the context of a single embodiment, the features may also be provided separately or in any suitable combination. Conversely, although the invention may be described herein in the context of separate embodiments for clarity, the invention may also be implemented in a single embodiment.

Reference in the specification to "some embodiments", "an embodiment", "one embodiment" or "other embodiments" means that a particular feature, structure, or characteristic described in connection with the embodiments is included in at least some embodiments, but not necessarily all embodiments, of the inventions.

It is to be understood that the phraseology and terminology employed herein is not to be construed as limiting and are for descriptive purpose only.

The principles and uses of the teachings of the present invention may be better understood with reference to the accompanying description, figures and examples.

It is to be understood that the details set forth herein do not construe a limitation to an application of the invention.

Furthermore, it is to be understood that the invention can be carried out or practiced in various ways and that the invention can be implemented in embodiments other than the ones outlined in the description above.

It is to be understood that the terms "including", "comprising", "consisting" and grammatical variants thereof do not preclude the addition of one or more components, features, steps, or integers or groups thereof and that the terms are to be construed as specifying components, features, steps or integers.

If the specification or claims refer to "an additional" element, that does not preclude there being more than one of the additional element.

It is to be understood that where the claims or specification refer to "a" or "an" element, such reference is not be construed that there is only one of that element.

It is to be understood that where the specification states that a component, feature, structure, or characteristic "may", "might", "can" or "could" be included, that particular component, feature, structure, or characteristic is not required to be included.

Where applicable, although state diagrams, flow diagrams or both may be used to describe embodiments, the invention is not limited to those diagrams or to the corresponding descriptions. For example, flow need not move through each illustrated box or state, or in exactly the same order as illustrated and described.

Methods of the present invention may be implemented by performing or completing manually, automatically, or a combination thereof, selected steps or tasks.

The term "method" may refer to manners, means, techniques and procedures for accomplishing a given task including, but not limited to, those manners, means, techniques and procedures either known to, or readily developed from known manners, means, techniques and procedures by practitioners of the art to which the invention belongs.

The descriptions, examples, methods and materials presented in the claims and the specification are not to be construed as limiting but rather as illustrative only.

Meanings of technical and scientific terms used herein are to be commonly understood as by one of ordinary skill in the art to which the invention belongs, unless otherwise defined.

The present invention may be implemented in the testing or practice with methods and materials equivalent or similar to those described herein.

Any publications, including patents, patent applications and articles, referenced or mentioned in this specification are herein incorporated in their entirety into the specification, to the same extent as if each individual publication was specifically and individually indicated to be incorporated herein. In addition, citation or identification of any reference in the description of some embodiments of the invention shall not be construed as an admission that such reference is available as prior art to the present invention.

While the invention has been described with respect to a limited number of embodiments, these should not be construed as limitations on the scope of the invention, but rather as exemplifications of some of the preferred embodiments. Other possible variations, modifications, and applications are also within the scope of the invention. Accordingly, the scope of the invention should not be limited by what has thus far been described, but by the appended claims.

## Claims

1. A system (100) for communicating anonymized data obtained from vehicles via a computer network, the system comprising:
a personalized database (112) in a private zone (110) configured to maintain a plurality of unique identifiers (10) of vehicles associated with respective data;
a unidirectional convertor (114) coupled to the personalized database, and located at the private zone, configured to anonymize the unique identifiers by applying a unidirectional conversion, to yield respective anonymized unique identifiers (20); and
a networked server (122) in an anonymized zone (120) separated from the private zone and configured to maintain said respective data associated with the anonymized unique identifiers,
wherein the networked server (122) is configured to:
receive a request from at least one third party (130), for a temporary anonymized identifier (30) associated with a vehicle linked to a specific unique identifier (10);
convert the specific unique identifier (10) to a respective specific anonymized unique identifier (20), using said unidirectional conversion;
in a case said anonymized unique identifier (20) exists on the networked server (122), generate a temporary anonymized identifier (30) by applying a bi-directional conversion to the specified anonymized unique identifier (20), wherein the bi-directional conversion is specific to said at least one third party (130);
receive a request from said third party (130) for data associated with a vehicle linked to a specific temporary anonymized identifier (30);
convert the specific temporary anonymized identifier (30) into a respective anonymized unique identifier (20) based on the bi-directional conversion; and
provide the requested data from the networked server (122) to said third party (130) based on the specific anonymized unique identifier (20).

2. The system according to claim 1, wherein the providing of the data to the third party (130) is only identifiable by the temporary anonymized identifier (30).

3. The system according to claim 1, wherein the unique identifiers (10) of vehicles associated with respective data are obtained from a plurality of sources, each holding a database of vehicles and their respective data.

4. The system according to claim 1, wherein the temporary anonymized identifier (30) is associated with a predefined time span after which it ceased to be operational.

5. The system according to claim 1, wherein the networked server (122) and the personalized database (112) are distinct from each other and communicate over a communication channel.

6. The system according to claim 1, wherein said at least one third party (130) comprises a plurality of third party clients, each associated with a unique bi-directional conversion at the networked server.

7. The system according to claim 1, wherein the unique identifiers (10) are unique identifiers of at least one of the elements of the vehicles.

8. A method (200) for communicating anonymized data of unique identified vehicles via a computer network, the method comprising:
maintaining on a personalized database, a plurality of unique identifiers of vehicles associated with respective data (210);
anonymizing the unique identifiers by applying a unidirectional conversion, to yield respective anonymized unique identifiers (220);
maintaining on a networked server, said respective data associated with the anonymized unique identifiers (230);
receiving at the networked server, a request from at least one third party for a temporary anonymized identifier associated with a vehicle linked to a specific unique identifier (240);
converting at the networked server, the specific unique identifier to a respective specific anonymized unique identifier, using said unidirectional conversion (250);
in a case said anonymized unique identifier exists on the networked server, generating a temporary anonymized identifier by applying a bi-directional conversion to the specified anonymized unique identifier, wherein the bi-directional conversion is specific to said at least one third party (260);
receiving at the networked server, a request from said third party for data associated with a vehicle linked to a specific temporary anonymized identifier (270);
converting at the networked server, the specific temporary anonymized identifier into a respective anonymized unique identifier based on the bi-directional conversion (280); and
providing the requested data from the networked server to said third party based on the specific anonymized unique identifier (290).

9. The method according to claim 8, wherein the providing of the data to the third party is only identifiable by the temporary anonymized identifier.

10. The method according to claim 8, wherein the unique identifiers of vehicles associated with respective data are obtained from a plurality of sources, each holding a database of vehicles and their respective data.

11. The method according to claim 8, wherein the temporary anonymized identifier is associated with a predefined time span after which it ceased to be operational.

12. The method according to claim 8, wherein the networked server and the personalized database are distinct from each other and communicate over a communication channel.

13. The method according to claim 8, wherein said at least one third party comprises a plurality of third party clients, each associated with a unique bi-directional conversion at the networked server.

14. The method according to claim 8, wherein the unique identifiers are unique identifiers of at least one of the elements of the vehicles.

15. A non-transitory computer readable medium for communicating anonymized data of unique identified vehicles via a computer network, wherein the computer readable medium comprising a set of instructions that when executed cause at least one computer processor to:
maintain, on a personalized database, a plurality of unique identifiers (210);
anonymize the unique identifiers, at the personalized database, by applying a unidirectional conversion, to yield respective anonymized unique identifiers (220);
maintain, on a networked database, said respective data associated with the anonymized unique identifiers (230);
receive at the networked server, a request from at least one third party, for a temporary anonymized identifier associated with a vehicle linked to a specific unique identifier (240);
convert at the networked server, the specific unique identifier to a respective specific anonymized unique identifier, using said unidirectional conversion (250);
in a case said anonymized unique identifier exists on the networked server, generate a temporary anonymized identifier by applying a bi-directional conversion to the specified anonymized unique identifier, wherein the bi-directional conversion is specific to said at least one third party (260);
receive at the networked server, a request from said third party for data associated with a vehicle linked to a specific temporary anonymized identifier (270);
convert at the networked server, the specific temporary anonymized identifier into a respective anonymized unique identifier based on the bi-directional conversion (280); and
provide the requested data from the networked server to said third party based on the specific anonymized unique identifier (290).

## Patentansprüche

1. System (100) zum Kommunizieren anonymisierter Daten, die über ein Rechnernetzwerk von Fahrzeugen erhalten wurden, wobei das System Folgendes umfasst:
eine personalisierte Datenbank (112) in einer privaten Zone (110), die dazu konfiguriert ist, eine Vielzahl eindeutiger Kennungen (10) von Fahrzeugen, die mit den jeweiligen Daten assoziiert sind, zu pflegen;
einen einseitig gerichteten Umwandler (114), der an die personalisierte Datenbank gekoppelt ist und sich in der privaten Zone befindet, der dazu konfiguriert ist, durch Anwenden einer einseitig gerichteten Umwandlung die eindeutigen Kennungen zu anonymisieren, um entsprechende anonymisierte eindeutige Kennungen (20) zu erhalten; und
einen vernetzten Server (122) in einer anonymisierten Zone (120), die von der privaten Zone getrennt ist, und der dazu konfiguriert ist, die entsprechenden Daten, die mit den anonymisierten eindeutigen Kennungen assoziiert sind, zu pflegen,
wobei der vernetzte Server (122) so konfiguriert ist:
er empfängt von mindestens einem Dritten (130) eine Anfrage nach einer temporär anonymisierten Kennung (30), die mit einem Fahrzeug, das mit einer spezifischen Kennung verknüpft ist, assoziiert ist (10);
er wandelt die spezifische eindeutige Kennung (10) durch Verwenden der einseitig gerichteten Umwandlung in eine entsprechende spezifische anonymisierte eindeutige Kennung (20) um;
falls die anonymisierte eindeutige Kennung (20) auf dem vernetzten Server (122) existiert, erzeugt er durch Anwenden einer zweiseitig gerichteten Umwandlung auf die spezifizierte anonymisierte eindeutige Kennung (20) eine temporäre anonymisierte Kennung (30), wobei die zweiseitig gerichtete Umwandung für den mindestens einen Dritten (130) spezifisch ist;
er empfängt von dem Dritten (130) eine Anfrage nach Daten, die mit einem Fahrzeug, das mit einer spezifischen anonymisierten Kennung (30) verknüpft ist, assoziiert sind;
er wandelt die spezifische temporäre anonymisierte Kennung (30) basierend auf der zweiseitig gerichteten Umwandlung in eine entsprechende anonymisierte Kennung (20) um; und
er stellt dem Dritten (130) die angeforderten Daten basierend auf der spezifischen anonymisierten eindeutigen Kennung (20) von dem vernetzten Server (122) bereit.

2. System nach Anspruch 1, wobei das Bereitstellen der Daten an den Dritten (130) nur von der temporären anonymisierten Kennung (30) identifizierbar ist.

3. System nach Anspruch 1, wobei die eindeutigen Kennungen (10) von Fahrzeugen, der mit entsprechenden Daten assoziiert ist, aus einer Vielzahl von Quellen erhalten werden, wobei jede davon eine Datenbank von Fahrzeugen und deren entsprechenden Daten enthält.

4. System nach Anspruch 1, wobei die temporäre anonymisierte Kennung (30) mit einer vordefinierten Zeitspanne assoziiert ist, nach deren Ablauf sie aufhörte, betriebsfähig zu sein.

5. System nach Anspruch 1, wobei der vernetzte Server (122) und die personalisierte Datenbank (112) voneinander verschieden sind und über einen Kommunikationskanal miteinander kommunizieren.

6. System nach Anspruch 1, wobei mindestens ein Dritter (130) eine Vielzahl von Third-Party-Clients umfasst, die jeder jeweils mit einer eindeutigen zweiseitig gerichteten Umwandlung in dem vernetzten Server assoziiert sind.

7. System nach Anspruch 1, wobei die eindeutigen Kennungen (10) eindeutige Kennungen mindestens eines der Elemente der Fahrzeuge sind.

8. Verfahren (200) zum Kommunizieren anonymisierter Daten von eindeutig identifizierten Fahrzeugen über ein Rechnernetzwerk, wobei das Verfahren Folgendes umfasst:
Pflegen einer Vielzahl eindeutiger Kennungen von Fahrzeugen, die mit den entsprechenden Daten (210) assoziiert sind, auf einer personalisierten Datenbank;
Anonymisieren der eindeutigen Kennungen durch Anwenden einer einseitig gerichteten Umwandlung, um entsprechende anonymisierte eindeutige Kennungen (220) zu erhalten;
Pflegen der entsprechenden Daten, die mit den anonymisierten eindeutigen Kennungen (230) assoziiert sind, auf einem vernetzten Server;
Empfangen einer Anfrage von mindestens einem Dritten auf dem vernetzten Server nach einer temporären anonymisierten Kennung, die mit einem Fahrzeug, das mit einer spezifischen eindeutigen Kennung (240) verknüpft ist, assoziiert ist;
Umwandeln der spezifischen eindeutigen Kennung in eine entsprechende spezifische eindeutige anonymisierte Kennung auf dem vernetzten Server, wobei die einseitig gerichtete Umwandlung (250) verwendet wird;
falls die anonymisierte Kennung auf dem vernetzten Server existiert, Erzeugen einer temporären anonymisierten Kennung durch Anwenden einer zweiseitig gerichteten Umwandlung auf die spezifizierte anonymisierte eindeutige Kennung, wobei die zweiseitig gerichtete Umwandlung für den mindestens einen Dritten (260) spezifisch ist;
Empfangen einer Anfrage von dem Dritten auf dem vernetzten Server nach Daten, die mit einem Fahrzeug, das mit einer spezifischen temporären anonymisierten Kennung (270) verknüpft ist, assoziiert sind;
Umwandeln der spezifischen temporären anonymisierten Kennung auf dem vernetzten Server basierend auf einer zweiseitig gerichteten Umwandlung (280) in eine entsprechende anonymisierte eindeutige Kennung; und
Bereitstellen der von dem vernetzten Server angeforderten Daten basierend auf der spezifischen anonymisierten eindeutigen Kennung (290) an den Dritten.

9. Verfahren nach Anspruch 8, wobei das Bereitstellen der Daten an den Dritten nur von der temporären anonymisierten Kennung identifizierbar ist.

10. Verfahren nach Anspruch 8, wobei die eindeutigen Kennungen von Fahrzeugen, die mit den entsprechenden Daten assoziiert sind, aus einer Vielzahl von Quellen erhalten werden, die alle jeweils eine Datenbank von Fahrzeugen und deren entsprechende Daten enthalten.

11. Verfahren nach Anspruch 8, wobei die temporäre anonymisierte Kennung mit einer vordefinierten Zeitspanne assoziiert ist, nach deren Ablauf sie aufhörte betriebsfähig zu sein.

12. Verfahren nach Anspruch 8, wobei der vernetzte Server und die personalisierte Datenbank voneinander verschieden sind und über einen Kommunikationskanal miteinander kommunizieren.

13. Verfahren nach Anspruch 8, wobei mindestens ein Dritter eine Vielzahl von Third-Party-Clients umfasst, wobei jeder mit einer eindeutigen zweiseitig gerichteten Umwandlung in dem vernetzten Server assoziiert ist.

14. Verfahren nach Anspruch 8, wobei die eindeutigen Kennungen eindeutige Kennungen mindestens eines der Elemente der Fahrzeuge sind.

15. Nichtflüchtiges, rechnerauslesbares Medium zum Kommunizieren anonymisierter Daten von eindeutig identifizierten Fahrzeugen über ein Rechnernetz, wobei das rechnerauslesbare Medium, einen Satz Anweisungen umfasst, die, wenn sie ausgeführt werden, mindestens einen Rechner hierzu veranlassen:
er pflegt eine Vielzahl eindeutiger Kennungen (210) auf einer personalisierten Datenbank;
er anonymisiert die eindeutigen Kennungen durch Anwenden einer einseitig gerichteten Umwandlung in der personalisierten Datenbank, um entsprechende anonymisierte eindeutige Kennungen (220) zu erhalten;
er pflegt eine vernetzte Datenbank, wobei die entsprechenden Daten mit den anonymisierten eindeutigen Kennungen (230) assoziiert sind;
er empfängt eine Anfrage von mindestens einem Dritten auf dem vernetzten Server nach einer temporären anonymisierten Kennung, die mit einem Fahrzeug, das mit einer spezifischen eindeutigen Kennung (240) gekoppelt ist, assoziiert ist;
er wandelt die spezifische eindeutige Kennung durch Verwenden der einseitig gerichteten Umwandlung (250) auf dem vernetzten Server in eine entsprechende spezifische anonymisierte eindeutige Kennung um;
falls die anonymisierte eindeutige Kennung auf dem vernetzten Server existiert, erzeugt er durch Anwenden einer zweiseitig gerichteten Umwandlung auf die spezifizierte anonymisierte eindeutige Kennung eine temporäre anonymisierte Kennung, wobei die zweiseitig gerichtete Umwandlung für mindestens einen Dritten (260) spezifisch ist;
er empfängt auf dem vernetzten Server eine Anfrage von dem Dritten nach Daten, die mit einem Fahrzeug, das an eine spezifische temporäre anonymisierte Kennung (270) gekoppelt ist, assoziiert sind;
er wandelt die spezifische temporäre anonymisierte Kennung basierend auf der zweiseitig gerichteten Umwandlung (280) auf dem vernetzten Server in eine entsprechende anonymisierte eindeutige Kennung um; und
er stellt die von dem vernetzten Server angeforderten Daten basierend auf der spezifischen anonymisierten Kennung (290) an den Dritten bereit.

## Revendications

1. Système (100) conçu pour communiquer des données anonymisées obtenues de véhicules via un réseau informatique, le système comprenant :
une base de données personnalisée (112) dans une zone privée (110) configurée pour conserver une pluralité d'identifiants uniques (10) de véhicules associés avec les données respectives ;
un convertisseur unidirectionnel (114) couplé à la base de données personnalisée et situé dans la zone privée, configuré pour anonymiser les identifiants uniques en y appliquant une conversion unidirectionnelle, pour produire des identifiants uniques anonymisés respectifs (20) ; et
un serveur en réseau (122) dans une zone anonymisée (120) séparée de la zone privée et configuré pour conserver lesdites données respectives associées aux identifiants uniques anonymisés,
**caractérisé en ce que** le serveur en réseau (122) est configuré pour :
recevoir une requête d'au moins un tiers (130), pour un identifiant temporaire anonymisé (30) associé à un véhicule lié à un identifiant unique spécifique (10) ;
convertir l'identifiant unique spécifique (10) en un identifiant unique anonymisé spécifique respectif (20)par le biais de ladite conversion unidirectionnelle ;
au cas où ledit identifiant unique anonymisé (20) existe sur le serveur en réseau (122), générer un identifiant anonyme temporaire (30) en y appliquant une conversion bidirectionnelle à l'identifiant unique anonymisé spécifié (20), la conversion bidirectionnelle étant spécifique audit au moins un tiers (130) ;
recevoir une requête dudit tiers (130) pour des données associées à un véhicule liées à un identifiant temporaire anonymisé spécifique (30) ;
convertir l'identifiant anonymisé temporaire spécifique (30) en un identifiant unique anonymisé respectif (20) sur la base de la conversion bidirectionnelle ; et
fournir les données demandées audit tiers (130) à partir du serveur en réseau (122) en fonction de l'identifiant unique anonymisé spécifique (20).

2. Système selon la revendication 1, **caractérisé en ce que** la fourniture des données au tiers (130) n'est identifiable que par l'identifiant temporaire anonymisé (30).

3. Système selon la revendication 1, **caractérisé en ce que** les identifiants uniques (10) de véhicules associés à des données respectives sont obtenus à partir d'une pluralité de sources, chacune détenant une base de données de véhicules et leurs données respectives.

4. Système selon l'une quelconque des revendications précédentes, **caractérisé en ce que** l'identifiant temporaire anonymisé (30) est associé à un laps de temps prédéfini au bout duquel il cesse d'être opérationnel.

5. Système selon l'une quelconque des revendications précédentes, **caractérisé en ce que** le serveur en réseau (122) et la base de données personnalisée (112) sont distincts l'un de l'autre et communiquent sur un canal de communication.

6. Système selon l'une quelconque des revendications précédentes, **caractérisé en ce que** ledit au moins un tiers (130) comprend une pluralité de clients tiers, chacun associé à une conversion bidirectionnelle unique au niveau du serveur en réseau.

7. Système selon l'une quelconque des revendications précédentes, **caractérisé en ce que** les identifiants uniques (10) sont des identifiants uniques d'au moins un des éléments des véhicules.

8. Procédé (200) conçu pour communiquer des données anonymisées de véhicules identifiés uniques via un réseau informatique, le procédé consistant à :
maintenir, sur une base de données personnalisée, une pluralité d'identifiants uniques de véhicules associés à des données respectives (210);
anonymiser les identifiants uniques en y appliquant une conversion unidirectionnelle afin de produire des identifiants uniques anonymisés respectifs (220) ;
maintenir, sur un serveur en réseau, lesdites données respectives associées aux identifiants uniques anonymisés (230);
recevoir, au niveau du serveur en réseau, une requête d'au moins un tiers pour un identifiant temporaire anonymisé associé à un véhicule lié à un identifiant unique spécifique (240) ;
convertir, au niveau du serveur en réseau, l'identifiant unique spécifique en un identifiant unique anonymisé spécifique respectif, par le biais de ladite conversion unidirectionnelle (250) ;
au cas où ledit identifiant unique anonymisé existe sur le serveur en réseau, générer un identifiant anonyme temporaire en appliquant une conversion bidirectionnelle à l'identifiant unique anonymisé spécifié, la conversion bidirectionnelle étant spécifique audit au moins un tiers (260) ;
recevoir, au niveau du serveur en réseau, une requête dudit tiers pour des données associées à un véhicule liées à un identifiant temporaire anonymisé spécifique (270) ;
convertir, au niveau du serveur en réseau, l'identifiant temporaire anonymisé spécifique en un identifiant unique anonymisé respectif sur la base de la conversion bidirectionnelle (280) ; et
fournir audit tiers les données requises à partir du serveur en réseau sur la base de l'identifiant unique anonymisé spécifique (290).

9. Procédé selon la revendication 8, **caractérisé en ce que** la fourniture des données au tiers n'est identifiable que par l'identifiant temporaire anonymisé.

10. Procédé selon la revendication 8, **caractérisé en ce que** les identifiants uniques de véhicules associés à des données respectives sont obtenus à partir d'une pluralité de sources, chacune détenant une base de données de véhicules et leurs données respectives.

11. Procédé selon la revendication 8, **caractérisé en ce que** l'identifiant temporaire anonymisé est associé à un laps de temps prédéfini au bout duquel il cesse d'être opérationnel.

12. Procédé selon la revendication 8, **caractérisé en ce que** le serveur en réseau et la base de données personnalisée sont distincts l'un de l'autre et communiquent sur un canal de communication.

13. Procédé selon la revendication 8, **caractérisé en ce que** ledit au moins un tiers comprend une pluralité de clients tiers, chacun associé à une conversion bidirectionnelle unique au niveau du serveur en réseau.

14. Procédé selon la revendication 8, **caractérisé en ce que** les identifiants uniques sont des identifiants uniques d'au moins un des éléments des véhicules.

15. Support lisible par ordinateur non transitoire conçu pour communiquer des données anonymisées de véhicules identifiés uniques via un réseau informatique, le support lisible par ordinateur comprenant un ensemble d'instructions qui, lorsqu'elles sont exécutées, amènent au moins un processeur informatique à :
maintenir, sur une base de données personnalisée, une pluralité d'identifiants uniques (210) ;
anonymiser les identifiants uniques, au niveau de la base de données personnalisée, en y appliquant une conversion unidirectionnelle afin de produire des identifiants uniques anonymisés respectifs (220) ;
maintenir, sur une base de données en réseau, lesdites données respectives associées aux identifiants uniques anonymisés (230) ;
recevoir, au niveau du serveur en réseau, une requête d'au moins un tiers, pour un identifiant temporaire anonymisé associé à un véhicule lié à un identifiant unique spécifique (240) ;
convertir, au niveau du serveur en réseau, l'identifiant unique spécifique en un identifiant unique spécifique anonymisé respectif, par le biais de ladite conversion unidirectionnelle (250) ;
au cas où ledit identifiant unique anonymisé existe sur le serveur en réseau, générer un identifiant anonyme temporaire en appliquant une conversion bidirectionnelle à l'identifiant unique anonymisé spécifié, la conversion bidirectionnelle étant spécifique audit au moins un tiers (260) ;
recevoir, au niveau du serveur en réseau, une requête dudit tiers pour des données associées à un véhicule liées à un identifiant temporaire anonymisé spécifique (270) ;
convertir, au niveau du serveur en réseau, l'identifiant temporaire anonymisé spécifique en un identifiant unique anonymisé respectif sur la base de la conversion bidirectionnelle (280) ; et
fournir audit tiers les données requises à partir du serveur en réseau sur la base de l'identifiant unique anonymisé spécifique (290).
